# EUROPÄISCHE PATENTSCHRIFT

(11) **EP 3 679 446 B1**
(45) Veröffentlichungstag und Bekanntmachung des Hinweises auf die Patenterteilung: **14.07.2021**
(21) Anmeldenummer: 18765617.8
(22) Anmeldetag: 05.09.2018
(51) Int. Cl.: G05D 16/06, G05D 16/10

(54) **DRUCKREDUZIERVENTIL FÜR FLÜSSIGE UND GASFÖRMIGE MEDIEN**
PRESSURE REDUCING VALVE FOR LIQUID AND GASEOUS MEDIA
SOUPAPE DE RÉDUCTION DE PRESSION POUR MILIEUX FLUIDES ET GAZEUX

(30) Priorität: 08.09.2017 DE 202017004695 U
(43) Veröffentlichungstag der Anmeldung: 15.07.2020
(73) Patentinhaber: Röchling Medical Waldachtal AG, 72178 Waldachtal (DE)
(72) Erfinder: SCHÖNBERGER, Markus, München 81545 (DE); PACO, José, 72202 Nagold (DE); NAFZ, Joachim, 72285 Pfalzgrafenweiler (DE); KALLFASS, Jochen, 72297 Seewald (DE); ORTEL, Carsten, 23554 Lübecl (DE)
(74) Vertreter: DTS Patent- und Rechtsanwälte Schnekenbühl und Partner mbB
(86) Internationale Anmeldenummer: PCT/EP2018/073829
(87) Internationale Veröffentlichungsnummer: WO 2019/048459

(56) Entgegenhaltungen:
- EP-A1- 2 843 495
- DE-A1- 4 434 634
- V V Frank Plastic: "Druckminderer V182 - V82", , 7. September 2012 (2012-09-07), XP055530184, Gefunden im Internet: URL:https://www.frankplastic.de/datenblatt /druckregelventile/Frank_Druckminderer_V_1 82_V_82_Prospekt_D.pdf [gefunden am 2018-12-04]

## Beschreibung

Die vorliegende Erfindung betrifft ein Druckreduzierventil für flüssige und gasförmige Medien, insbesondere zur Regelung des Drucks in Rohrleitungssystemen, z.B. in Gebäuden.

Druckreduzierventile sind bereits aus dem Stand der Technik bekannt. Diese werden beispielsweise in Leitungssystemen für Wasserbereitungsanlagen oder auch für Reinstwasseranlagen eingesetzt.

Die DE 44 34 634 B2 offenbart ein Druckreduzierventil, bei welchem die Einstellung des gewünschten Abgangsdrucks einfach handhabbar ist. Das in das Gehäuse einströmende Medium weist einen hohen bzw. zu hohen Druck für die weitere Nutzung auf. Durch die Einstelleinheit kann der gewünschte Abgangsdruck eingestellt werden, indem die Feder entsprechend vorgespannt wird. Dies wiederum ergibt die entsprechende Kraft auf den Kolben, der den Abgangsdruck regelt. Ist die Feder stark zusammengepresst, erzeugt sie eine hohe Gegenkraft auf den Kolben, wodurch der gewünschte Abgangsdruck hoch ist. Der Kolben bzw. der Dichtsitz, der sich zwischen Ventilelement und ringförmigem Vorsprung des Gehäuses befindet, schließt sich erst, wenn der aufbauende Druck im Ventil bzw. in der Kolbenkammer so groß ist, dass er den zulässigen Abgangsdruck überschreitet, wodurch der Kolben gegen die Federkraft gedrückt wird und das Ventilelement den Ventilsitz schließt. Der Kolben und das Ventilelement mit Stange bestehen aus mehreren Einzelteilen, zudem sind Dichtelemente daran angeordnet, die die Dichtheit gewährleisten, die ebenfalls als separate Teile ausgebildet sind. Ein derartiges Druckreduzierventil weist Nachteile auf im Einsatz bei hochreinen Medien, da dadurch die vielen Einzelteile die Möglichkeit einer Verunreinigung erhöht ist. Zudem sind Dichtelemente aus Elastomeren, wie sie üblicherweise eingesetzt werden, für die Anwendung bei hochreinen Medien unzulässig, da sie einen ungewünschten Abrieb verursachen, der das Reinstmedium verunreinigen könnte.

Aus der EP 2 843 495 A1 ist weiter ein Druckreduzierventil bekannt, bei dem der Kolben des Druckreduzierventils einteilig ausgebildet ist und das Dichtelement integral am Kolben oder integral am Innengehäuse angeordnet ist.

Der "Druckminderer V182 - V82" (V V Frank Plastik) beschreibt ein Druckreduzierventil für flüssige und gasförmige Medien, insbesondere zur Regelung des Drucks in Rohrleitsystemen, mit einem Gehäuse mit einem Gehäuseoberteil, ein Gehäusemittelteil und einem Gehäusedeckel, wobei das Gehäusemittelteil eine Kolbenbohrung aufweist, wobei das Druckreduzierventil weiter ein Trennelement zur Unterteilung des Gehäuses in einem fluidfreien und einem fluiddurchströmten Bereich aufweist, wobei der fluiddurchströmte Bereich wenigstens eine Druckkammer umfasst, die von dem Trennelement teilweise begrenzt wird, wobei das Druckreduzierventil außerdem einen in der Kolbenbohrung bewegliche geführten Kolben aufweist, wobei der Kolben an einem seiner Enden mit dem Trennelement verbunden ist und an seinem anderen Ende eine Sitzdichtung aufweist (vgl. URL: https://www.frankplastic.de/datenblatt/druckregelventile/Frank_Druckminderer_V_182 _V 82_Prospekt_D.pdf; 7. September 2012).

Weitere Druckreduzierventile sind beispielsweise aus der JP 2002-157021 A, der DE 40 24 487 A1, der GB 2071277 A, der EP 2 211 247 A2, der US 3,902,522, der FR 2632045 A1 sowie der DE 44 34 634 A1 bekannt.

Die Aufgabe der vorliegenden Erfindung ist es, ein Druckreduzierventil der eingangs genannten Art in vorteilhafter Weise weiterzubilden, insbesondere dahingehend, dass ein Druckreduzierventil einfach aufgebaut sein kann und gleichzeitig die Druckverhältnisse in allen Betriebslagen des Ventils gleichmäßiger ausgestaltet werden können.

Diese Aufgabe wird erfindungsgemäß gelöst durch ein Druckreduzierventil mit den Merkmalen des Anspruchs 1. Danach ist vorgesehen, dass ein Druckreduzierventil für flüssige und gasförmige Medien, insbesondere zur Regelung des Drucks in Rohrleitungssystemen, vorzugsweise in Gebäuden, mit einem Gehäuse bereitgestellt wird, wobei das Gehäuse ein Gehäuseoberteil, ein Gehäusemittelteil und einen Gehäusedeckel aufweist, wobei das Gehäusemittelteil eine Kolbenbohrung aufweist, wobei das Druckreduzierventil weiter ein Trennelement zur Unterteilung des Gehäuses in einen fluidfreien und einen fluiddurchströmten Bereich aufweist, wobei der fluiddurchströmte Bereich wenigstens eine Druckkammer umfasst, die von dem Trennelement teilweise begrenzt wird, wobei das Druckreduzierventil außerdem einen in der Kolbenbohrung beweglich geführten Kolben aufweist, wobei der Kolben an einem seiner Enden mit dem Trennelement verbunden ist und an seinem anderen Ende eine Sitzdichtung aufweist, wobei die Druckkammer einen Boden aufweist, der auf dem Trennelement abgewandten Seite der Druckkammer angeordnet ist und dessen der Druckkammer zugewandte Oberfläche relativ zu dem Trennelement zumindest teilweise geneigt ist.

Die Erfindung basiert auf dem Grundgedanken, dass durch wenigstens eine geneigte Begrenzungsfläche der Druckkammer der Druckaufbau und auch insgesamt die Druckbelastung auf das Trennelement im Betrieb des Druckreduzierventils gleichmäßiger erfolgt als bei bislang bekannten Lösungen. Druckspitzen und somit ungleichmäßige Krafteinleitungen sollen so nach Möglichkeit vermieden werden. Durch die gleichmäßigere Belastung soll insgesamt eine längere Standzeit für das Druckreduzierventil ermöglicht werden. Die Neigung einer Oberfläche der Druckkammer führt weiter zu einer Erhöhung des Volumenstroms durch die Druckkammer und ermöglicht aufgrund der verbesserten, gleichmäßigeren Druckverteilung eine Optimierung der Geschwindigkeitsverteilung, insbesondere in der Druckkammer. Auch das Einström- und Durchströmverhalten in die und durch die Druckkammer wird deutlich optimiert. Insbesondere wird neben einer gleichmäßigen Druckverteilung eine gleichmäßigere Strömungsgeschwindigkeit und ein gleichmäßigeres Geschwindigkeitsprofil des in die Druckkammer und durch die Druckkammer strömenden Fluids erreicht. Insbesondere werden durch eine gleichmäßigere Strömungsgeschwindigkeit in der Druckkammer die Herausspülzeit von Partikeln, insbesondere Nanometerpartikel, aus dem Ventil, insbesondere Druckkammer, beschleunigt. Gleichzeitig werden die von den Anlagenbetreibern, insbesondere von Betreibern von sog. Ultra Pure Water Anlagen geforderten Regelcharakteristiken und maximalen Verlustleistungen eingehalten. Insbesondere ist denkbar, die Neigung in Abhängigkeit von der gewünschten Druckverteilung und/oder in Abhängigkeit von der Strömungsgeschwindigkeit und dem Geschwindigkeitsprofil des in die Druckkammer und durch die Druckkammer strömenden Fluids zu wählen. Durch eine gleichmäßigere Einströmung in die Druckkammer und damit eine gleichmäßigere Krafteinleitung in das Trennelement können auftretende Kippmomente im Bereich der Kolben- und / oder Trennebenenführung bzw. im Bereich des Trennelements reduziert werden. Kippmomente führen zu höheren Reibungswerten und somit zu einer Erhöhung der Hysterese. Im Umkehrschluss führen verringerte Reibungswerte und ein verbessertes Ansprechverhalten durch eine gleichmäßige Krafteinleitung in das Trennelement zu einer Verkleinerung der Hysterese. Darüberhinaus verursacht eine reduzierte Reibung zwischen Kolben und Kolbenbohrung durch verringerte Kippmomente weniger reibungsinduzierte Nanometerpartikel, die insbesondere beim Betrieb von Reinstmedienanlagen soweit wie möglich vermieden werden sollen.

Des Weiteren kann vorgesehen sein, dass der Boden durch das Gehäuse ausgebildet ist. Hierdurch wird es möglich, vergleichsweise wenige Bauteile benutzen zu müssen. Darüber hinaus kann eine Funktionsintegration im Gehäuse abgebildet werden. Außerdem ermöglichen wenige Bauteile im Zusammenhang mit dem Gesamtaufbau des Druckreduzierventils auch eine einfachere Montage und auch Reinigung für den gewünschten Anwendungszweck.

Außerdem ist möglich, dass die der Druckkammer zugewandte Oberfläche des Trennelements zumindest teilweise bezogen auf die Kolbenachse waagerecht angeordnet ist. Durch die waagerechte Anordnung der der Druckkammer zugewandten Oberfläche des Trennelements bezogen auf die Kolbenachse kann erreicht werden, dass das Trennelement grundsätzlich einfacher aufgebaut sein kann.

Gleichzeitig ist es aber ebenfalls möglich, dass die der Druckkammer zugewandte Oberfläche des Bodens zumindest teilweise bezogen auf die Kolbenachse waagerecht angeordnet ist. Dies ist insbesondere dann vorteilhaft, wenn der Boden durch das Gehäuse ausgebildet ist und hierdurch die Gehäusegestaltung erleichtert werden kann.

Grundsätzlich ist aber ebenfalls denkbar, dass die der Druckkammer zugewandte Oberfläche des Bodens und die der Druckkammer zugewandte Oberfläche des Trennelements jeweils zumindest teilweise bezogen auf die Kolbenachse geneigt angeordnet sind. Hierdurch lässt sich das Einströmverhalten und auch die Druckverteilung sowie die Geschwindigkeitsverteilung in der Druckkammer noch besser einstellen.

Des Weiteren kann vorgesehen sein, dass das Trennelement eine Membran ist oder umfasst. Derartige Membranen, die mit dem Kolben entsprechend verbunden sind, ermöglichen eine einfache Trennung von fluidfreiem und fluiddurchströmten Bereich. Der Einsatz einer Membran erlaubt es auch, vergleichsweise einfach Neigungen entsprechend einzustellen oder auch lediglich eine waagerechte Ausrichtung bezogen auf die Kolbenachse zu ermöglichen.

Alternativ ist aber auch denkbar, dass das Trennelement ein Abschnitt des Kolbens ist oder durch einen Abschnitt des Kolbens ausgebildet ist. Grundsätzlich ist unter einem Abschnitt des Kolbens auch ein weiterer Ansatz zu verstehen, der mit dem Kolben in Verbindung steht. Eine Einstückigkeit des Trennelements mit dem Kolben ist möglich, jedoch nicht zwingend erforderlich.

Insbesondere kann vorgesehen sein, dass das Trennelement wenigstens ein Radialdichtelement aufweist. Durch das Radialdichtelement kann verhindert werden, dass Fluid in der Kolbenbohrung zwischen Kolben und Wandung der Kolbenbohrung hindurchtritt. Eine weitere denkbare Ausgestaltung ist auch, dass das Trennelement in diesem Zusammenhang auch die Abdichtung zwischen dem fluidfreien und dem fluiddurchströmten Bereich innerhalb des Druckreduzierventils vollständig definiert.

Insbesondere ist dabei denkbar, dass das Radialdichtelement im montierten Zustand des Druckreduzierventils dichtend an einer Wandung der Kolbenbohrung anliegt.

Des Weiteren kann vorgesehen sein, dass die der Druckkammer zugewandte Oberfläche des Bodens einen Neigungswinkel relativ zu der der Druckkammer zugewandten Oberfläche des Trennelements aufweist, der im Bereich zwischen 0° bis ca. 45°, insbesondere zwischen größer 0° bis ca. 15° gewählt ist. In diesem Neigungsbereich konnte nachgewiesen werden, dass hier besonders günstige, d.h. gleichmäßige, Geschwindigkeitsverhältnisse und Druckverhältnisse für die Druckkammer erzielt werden können.

Insbesondere ist weiter zu beachten, dass die die Druckkammer begrenzenden Oberflächen mit sanften Übergängen, d.h. abgerundeten Übergängen versehen sind.

Auch dies hilft, die Strömungsverhältnisse, Druckverhältnisse und Geschwindigkeitsverhältnisse innerhalb der Druckkammer zu vergleichmäßigen und Druckspitzen und Geschwindigkeitsspitzen sowie Geschwindigsnullstellen (oder ähnliches Wort für zu geringe Geschwindigkeiten) zu vermeiden.

Darüber hinaus kann vorgesehen sein, dass die Druckkammer an wenigstens eine Steigbohrung anschließt. Die Steigbohrung dient dabei als Verbindungsleitung oder Anbindung der Druckkammer an eine Ventilkammer, die bezogen auf den Sitz stromabwärts angeordnet ist und damit auch als Fluidverbindung mit der Ausgangsseite des Druckreduzierventils dient.

In diesem Zusammenhang kann insbesondere vorgesehen sein, dass die Steigbohrung einen nierenförmigen Querschnitt aufweist. Ein derartiger Querschnitt ermöglicht eine vergleichsweise einfache Anordnung und strömungsgünstige Verbindung mit der Druckkammer. Darüber hinaus wird hierdurch der nutzbare Querschnitt der Steigbohrung verbessert und vergrößert, ohne hierbei entsprechende Gehäuseverbreiterungen bereitstellen zu müssen. Im Wesentlichen ist es denkbar, dass die Steigbohrung mit ihrem nierenförmigen Querschnitt sich an die Wandung der Kolbenbohrung anschmiegt und diese zumindest teilweise umgreift.

Insbesondere kann vorgesehen sein, dass die Steigbohrung bezogen auf den Öffnungsquerschnitt einen Winkel von größer 0° bis ca. 255°, insbesondere 90° bis 135° aufweist.

Insbesondere kann ein abgestimmtes Zusammenspiel zwischen Fluidvolumen der Auslassseite, der Steigbohrungen und Druckkammer, zu einer optimalen Druckverteilung und optimalen Strömungsgeschwindigkeiten führen.

Zwischen Gehäuse und Kolben kann eine Dichthülse vorgesehen sein. Dadurch kann eine alternative Dichtmöglichkeit zwischen Gehäuse und Kolben realisiert werden. Außerdem wird es so möglich, die Dichtung zwischen Gehäuse und Kolben besser hinsichtlich ihres Ortes festzulegen. Denkbar ist beispielsweise, dass die Hülse auf den Kolben aufgeschoben ist und im Wesentlichen die Grundform eines länglichen Hohlzylinders hat. Dadurch wird eine Relativbewegung zwischen Kolben und Hülse deutlich erschwert, was von Vorteil für die Dichtfunktion ist. Die Dichthülse liegt vorzugsweise elastisch dichtend auf einer Außenfläche, z.B. einem entsprechend dafür vorgesehenen Ansatz des Kolbens, an.

Des Weiteren kann vorgesehen sein, dass die Dichthülse im montierten Zustand des Druckreduzierventils derart angeordnet und beschaffen ist, dass sie eine Dichtung zwischen Trennelement und Kolben ausbildet. Dadurch kann mit der Dichthülse zusätzlich zur Dichtfunktion zwischen Gehäuse und Kolben noch eine weitere Dichtungfunktion erfüllt werden, nämlich die Dichtung zwischen Trennelement und Kolben. Hier kann insbesondere vorgesehen sein, dass in bekannter Form vom fluidfreien Bereich aus ein Befestigungselement durch das Trennelement hindurch mit dem Kolben verbunden wird, z.B. eine Schraube. Diese Verbindung wird dann entsprechend durch die Dichthülse abgedichtet.

Grundsätzlich ist denkbar, dass die Dichthülse aus einem elastischen und dichtenden Material ausgebildet ist.

Die Dichthülse kann insbesondere elastomerfrei und/oder aus Fluorpolymeren, insbesondere aus PTFE, ausgebildet sein.

Weitere Einzelheiten und Vorteile der Erfindung sollen nun anhand von in den Zeichnungen dargestellten Ausführungsbeispielen näher erläutert werden.

Es zeigen:
- Fig. 1: eine Schnittdarstellungen durch ein erstes Ausführungsbeispiel eines erfindungsgemäßen Druckreduzierventils;
- Fig. 2: eine weitere Ansicht des in Fig. 1 gezeigten Druckreduzierventils;
- Fig. 3: eine weitere Ansicht des in Fig. 1 gezeigten Druckreduzierventils;
- Fig. 4: eine Draufsicht auf einen Teil des Druckreduzierventils gem. Fig. 1, insbesondere mit Ansicht des Querschnitts der Steigbohrung;
- Fig. 5: eine Schnittdarstellung durch ein zweites Ausführungsbeispiel eines erfindungsgemäßen Druckreduzierventils;
- Fig. 6: eine weitere Darstellung des in Fig. 5 gezeigten Druckreduzierventils;
- Fig. 7: eine Schnittdarstellung durch ein drittes Ausführungsbeispiel eines erfindungsgemäßen Druckreduzierventils;
- Fig. 8: eine weitere Schnittdarstellung durch das Druckreduzierventil gemäß Fig. 7;
- Fig. 9: eine Schnittdarstellung durch ein viertes Ausführungsbeispiel eines erfindungsgemäßen Druckreduzierventils;
- Fig. 10: eine weitere Schnittdarstellung durch das Druckreduzierventil gemäß Fig. 9;
- Fig. 11: eine Schnittdarstellung durch ein fünftes Ausführungsbeispiel eines erfindungsgemäßen Druckreduzierventils;
- Fig. 12: eine weitere Schnittdarstellung durch das Druckreduzierventil gemäß Fig. 11;
- Fig. 13: eine Schnittdarstellung durch ein sechstes Ausführungsbeispiel eines erfindungsgemäßen Druckreduzierventils;
- Fig. 14: eine weitere Schnittdarstellung durch das Druckreduzierventil gemäß Fig. 13; und
- Fig. 15: eine Schnittdarstellung durch ein siebtes Ausführungsbeispiel eines erfindungsgemäßen Druckreduzierventils.

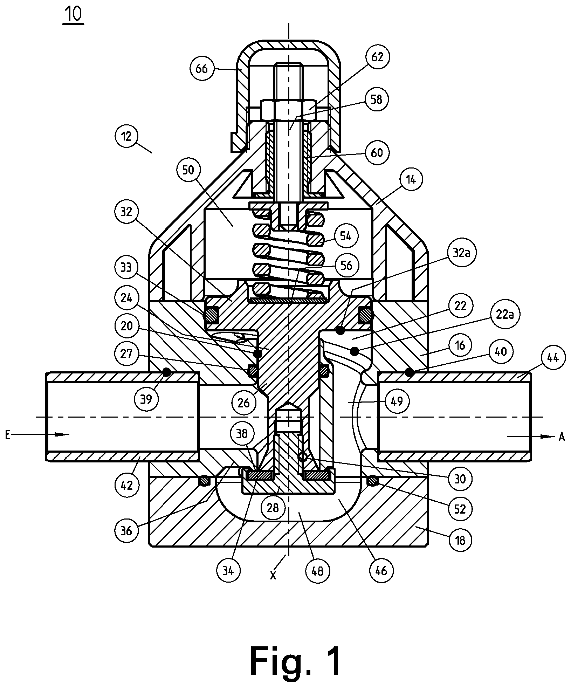

Fig. 1 zeigt ein erstes Ausführungsbeispiel eines erfindungsgemäßen Druckreduzierventils 10.

Das Druckreduzierventil 10 ist ein Druckreduzierventil 10 für flüssige und gasförmige Medien, insbesondere zur Regelung des Drucks in Rohrleitungssystemen, vorzugsweise in Gebäuden.

Als Anwendungsbereich kommen beispielsweise Reinstwasseranwendungen oder die Verwendung als Reinstwasser-Druckreduzierventile in Betracht.

Das Druckreduzierventil 10 weist ein Gehäuse 12 auf.

Das Gehäuse 12 weist dabei ein Gehäuseoberteil 14, ein Gehäusemittelteil 16 und einen Gehäusedeckel 18 auf.

Dabei weist das Gehäusemittelteil 16 eine Kolbenbohrung 20 auf, die sich auf der dem Gehäuseoberteil 14 zugewandten Seite eine Druckkammer 22 übergeht bzw. mündet.

Das Druckreduzierventil 10 weist weiter einen in der Kolbenbohrung 20 geführten Kolben 24, auch Abschlusskörper 24 genannt, auf.

Der Kolben 24 ist dabei mehrteilig ausgebildet.

Der mehrteilige Kolben 24 weist dabei ein Kolbenoberteil 26 und ein Kolbenunterteil 28 auf.

Weiter ist eine Kolbendichtung 27 vorgesehen, die mit dem Kolbenoberteil 26 dichtend zusammenwirkt.

Die Kolbendichtung 27 ist ein Radialdichtring (z.B. O-Ring). Hier ist die Kolbendichtung 27 im Gehäuse 16 aufgenommen und radial dichtend gegen das Kolbenoberteil 26 angestellt.

Das Kolbenunterteil 28 ist weiter auf dem Kolbenoberteil 26 mittels eines Gewindes 30 aufgeschraubt.

Am Kolbenoberteil 26 ist einstückig ein Trennelement 32 in Form eines Kolbenzylinderrings 32 angeformt.

Das Trennelement 32 weist weiter ein Radialdichtelement 33 auf.

Das Radialdichtelement 33 liegt im montierten Zustand des Druckreduzierventils dichtend an einer Wandung des Gehäuses 16 an.

Am Kolbenunterteil 28 ist eine Sitzdichtung 34 angeordnet.

Es handelt sich im gezeigten Ausführungsbeispiel um eine axial dichtende Sitzdichtung 34, auch Sitzring 34 genannt. Grundsätzlich sind auch radial dichtende Lösungen denkbar.

Im Gehäuse 16 ist gegenüberliegend vom Sitzring 34 ein Sitz 36 mit einem umlaufenden Dichtvorsprung 38 vorgesehen.

Der Sitzring 34 und der Sitz 36 mit dem Dichtvorsprung 38 sind derart zueinander angeordnet, dass im geschlossenen Zustand des Druckreduzierventils 10 gegen den Sitz 36 mit dem umlaufenden Dichtvorsprung 38 angestellt ist.

Das Druckreduzierventil 10 ist hier im geöffneten montierten Zustand gezeigt. Im geschlossenen montierten Zustand ist die Sitzdichtung 34 dichtend an den unteren Rand (wie in der Figur gezeigt) der Kolbenbohrung 20, der durch den Dichtvorsprung 38 definiert ist, angelegt.

Das Druckreduzierventil 10 weist weiter einen ersten Anschluss 39 der Eingangsseite E und einen zweiten Anschluss 40 auf der Ausgangsseite A auf. In die Anschlüsse 39 und 40 ist jeweils ein Rohrstück 42 bzw. 44 angeschlossen, hier durch ein entsprechend vorgesehenes Gewinde eingeschraubt.

Der Anschluss 39 ist mit der Kolbenbohrung 20 verbunden und mündet in diese hinein. Kolbenbohrung 20 und Anschluss 39 sind dabei senkrecht zueinander angeordnet.

In den dem Gehäusedeckel 18 zugewandten Endbereich der Kolbenbohrung 20 ist die Druckkammer 22 angeordnet, die zum fluiddurchströmten Bereich 46 des Druckreduzierventils 10 gehört.

Zum fluiddurchströmten Bereich gehört weiter ein in Fig. 1 unterhalb des Sitzes 32 angeordneter bzw. dort gezeigter Ventilraum 48 und eine Steigbohrung 49. Der Ventilraum 48 ist mit der Ausgangsseite A verbunden und über Steigbohrung 49 mit der Druckkammer 22.

Wie dies weitere aus Fig. 1 ersichtlich ist, ist die der Druckkammer 22 zugewandte Oberfläche 32a bezogen auf die Kolbenachse X des Abschlusskörpers 24 waagerecht angeordnet.

Der Boden 22a der Druckkammer 22 ist auf der dem Trennelement 32 abgewandten Seite der Druckkammer 22 angeordnet.

Die der Druckkammer 22 zugewandte Oberfläche 32a des Bodens 22a ist dabei relativ zum Trennelement 32 geneigt.

Der durch diese beiden Oberflächen 22a und 32a eingeschlossene Neigungswinkel bewegt sich hier in einem Bereich zwischen 0° und 30°.

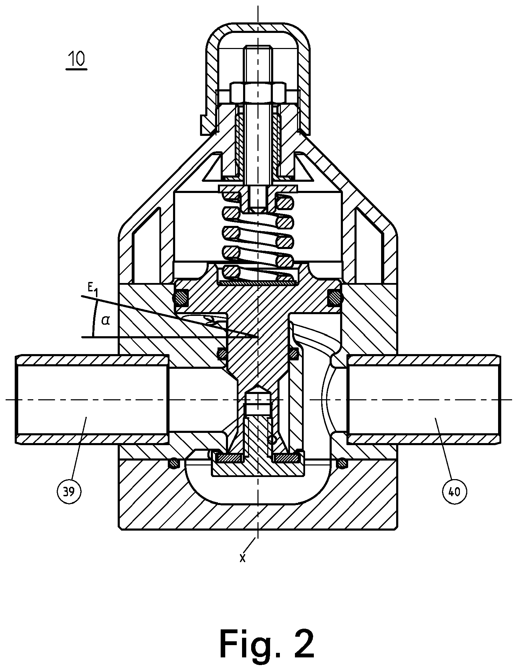

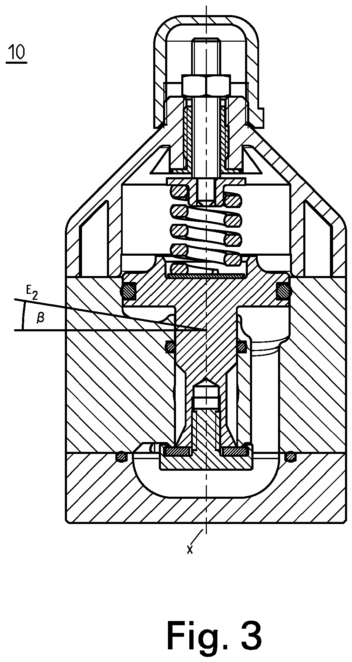

Wie dies weiter aus den Fig. 2 und 3 ersichtlich ist, variiert dieser Neigungswinkel über die gesamte Druckkammer 22 in einem Winkelbereich zwischen 20° und 30°.

Fig. 2 zeigt den Schnitt durch die Ebene, die durch die Achse durch den Anschluss 39 und den Anschluss 40 sowie die Kolbenachse X aufgespannt wird.

Der Winkel α durch die gedachte Ebene E1, die die Neigung der Oberfläche 22a des Bodens 22 beschreibt, ist in Fig. 2 eingezeichnet.

Fig. 3 zeigt die 90° dazu versetzte Ansicht.

Der Winkel β durch die gedachte Ebene E2 ist in Fig. 3 eingezeichnet, die die Neigung der Oberfläche 22a des Bodens 22 beschreibt.

Der Winkel α ist dabei größer als der Winkel β.

Der Winkel α beträgt hier ca. 30° und der Winkel β ca. 20°.

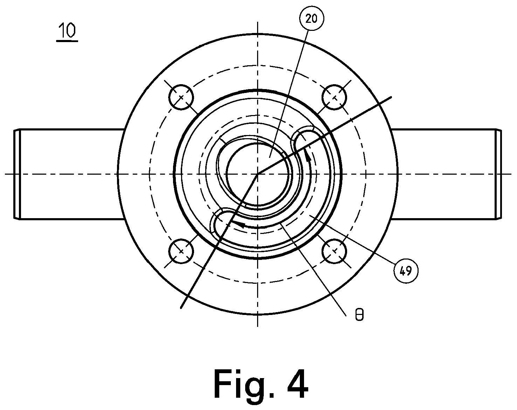

Fig. 4 zeigt die Draufsicht auf das Gehäuse 16 ohne Deckel. Hierbei ist die Steigbohrung 49 von oben ersichtlich und deren nierenförmiger Querschnitt.

Der Öffnungswinkel der Steigbohrung 49 θ weist dabei einen Winkel von hier 160° auf (ohne Berücksichtigung der Abrundungen).

Wie dies weiter ersichtlich ist, schmiegt sich die Steigbohrung 49 mit ihrem nierenförmigen Querschnitt parallel an die Wandung der Kolbenbohrung 20 an.

Weiter ist ein fluidfreier Bereich 50 vorgesehen, der sich im Wesentlichen im Bereich des Gehäuseoberteils 14 befindet und durch das Trennelement 32 vom fluiddurchströmten Bereich 46 abgetrennt ist.

Zwischen Gehäusemittelteil 16 und Gehäusedeckel 18 ist eine Dichtung 52 vorgesehen, hier in Form eines Dichtringes, der in eine umlaufende Nut im Gehäusedeckel 18 eingelegt ist. Grundsätzlich kann vorgesehen sein, dass die umlaufende Nut beispielsweise auch im Gehäusemittelteil 16 angeordnet ist.

Das Druckreduzierventil 10 weist weiter eine Feder 54 auf, die im Gehäuseoberteil 14 angeordnet ist. Die Feder 54 ist dabei einerseits über eine Scheibe 56 an ihrem einen Ende gegen den Kolben 24 angestellt und an ihrem anderen Ende gegen eine Einstellschraube 58.

Die Einstellschraube 58 ist dabei in einer Buchse 60 im Gehäuseoberteil 14 geführt und kann über eine Einstellmutter 62 entsprechend bewegt werden.

Zur Auflage an der Feder 54 ist eine Federaufnahme vorgesehen, die das der Einstellschraube 58 zugewandte Ende der Feder 54 führt und entsprechend abstützt. Das freie Ende der Einstellschraube 58 wird mittels eines abnehmbaren Deckels 66 abgedeckt.

Die Funktion des Druckreduzierventils 10 lässt sich dabei wie folgt beschreiben:
Durch den Anschluss 39 (auch Einlass E genannt) und über das Rohr 42 strömt das Fluid in das Druckreduzierventil 10 ein (siehe Pfeil in der Figur) und bei geöffneter Ventilstellung weiter durch den unteren Bereich der Kolbenbohrung 20 an der Sitzdichtung 34 vorbei in Richtung Anschluss 40 (auch Auslass A genannt).

Der Kolben 24 wird durch die Feder 54 entsprechend der Einstellung und Vorspannung durch die Einstellschraube 58 nach unten gedrückt und hierdurch geöffnet. Die entsprechende Federkraft, die durch die vorgespannte Feder 54 mit Hilfe des Federhalters wirkt, hält das Druckreduzierventil 10 geöffnet.

Die Stärke der Vorspannung der Feder 54 wird über die Einstellung der Schraube 58 mit der Mutter 62 erreicht (hier ist auch der Einsatz einer Spindel denkbar), so dass die Feder 54 auf die entsprechende Länge vorgespannt wird.

Bei geschlossener Stellung (hier nicht gezeigt) liegt der Abgangsdruck (Druck im Bereich des Anschlusses 40) über dem voreingestellten Abgangsdruckpunkt. Das Medium strömt dann über die Steigbohrung 49, welche im Gehäusemittelteil 16 angeordnet ist und drückt dort gegen das Trennelement 32 und Teile des Kolbenoberteils 26.

Dieser Druck, der dort entsteht, drückt somit gegen die Federkraft 54.

Die Neigung einer Oberfläche der Druckkammer 22, hier des Bodens 22a, führt weiter zu einer Erhöhung des Volumenstroms durch die Druckkammer 22 und ermöglicht aufgrund der verbesserten, gleichmäßigeren Druckverteilung eine Optimierung der Geschwindigkeitsverteilung des Fluids in der Druckkammer 22.

Auch das Einström- und Durchströmverhalten in die und durch die Druckkammer 22 wird deutlich optimiert. Insbesondere wird neben einer gleichmäßigen Druckverteilung eine gleichmäßigere Strömungsgeschwindigkeit und ein gleichmäßigeres Geschwindigkeitsprofil des in die Druckkammer 22 und durch die Druckkammer strömenden Fluids erreicht. So werden durch eine gleichmäßigere Strömungsgeschwindigkeit in der Druckkammer 22 die Herausspülzeit von Partikeln, insbesondere Nanometerpartikel, aus dem Ventil 10 und insbesondere aus der Druckkammer 22 beschleunigt.

Durch die gleichmäßigere Einströmung in die Druckkammer 22 und damit eine gleichmäßigere Krafteinleitung in das Trennelement 32 können auftretende Kippmomente im Bereich der Kolben- und / oder Trennebenenführung bzw. im Bereich des Trennelements 32 reduziert werden. Kippmomente führen zu höheren Reibungswerten und somit zu einer Erhöhung der Hysterese des Druckreduzierventils 10. Im Umkehrschluss führen verringerte Reibungswerte und ein verbessertes Ansprechverhalten durch eine gleichmäßige Krafteinleitung in das Trennelement zu einer Verkleinerung der Hysterese. Darüberhinaus verursacht eine reduzierte Reibung zwischen Kolben und Kolbenbohrung durch verringerte Kippmomente weniger reibungsinduzierte Nanometerpartikel, die insbesondere beim Betrieb von Reinstmedienanlagen soweit wie möglich vermieden werden sollen.

Sobald die Kraft durch das Medium unterhalb des Trennelements 32 höher ist als der zulässige Abgangsdruck bzw. die eingestellte Federkraft 54, wird die Feder 54 weiter zusammengepresst und der Kolben 24 wird in der Kolbenbohrung 20 durch das Trennelement 32 und den Ansatz 26a am Kolbenoberteil 26 nach oben gezogen.

Die am Kolbenunterteil 28 angeordnete Sitzdichtung 34 dichtet die Kolbenbohrung 20 ab, so dass ein Einströmen von Fluid durch die Kolbenbohrung in den Anschluss 40 nicht mehr möglich ist.

Durch den hochgezogenen Kolben 24 ist somit das Ventil geschlossen und abgedichtet. Senkt sich dann der Abgangsdruck unter den voreingestellten Wert, sackt auch der Druck unterhalb des Trennelements 32 und insbesondere in der Druckkammer 22 wieder ab. Der Kolben 24 sinkt entsprechend ab und das Medium kann das Ventil wieder durchströmen.

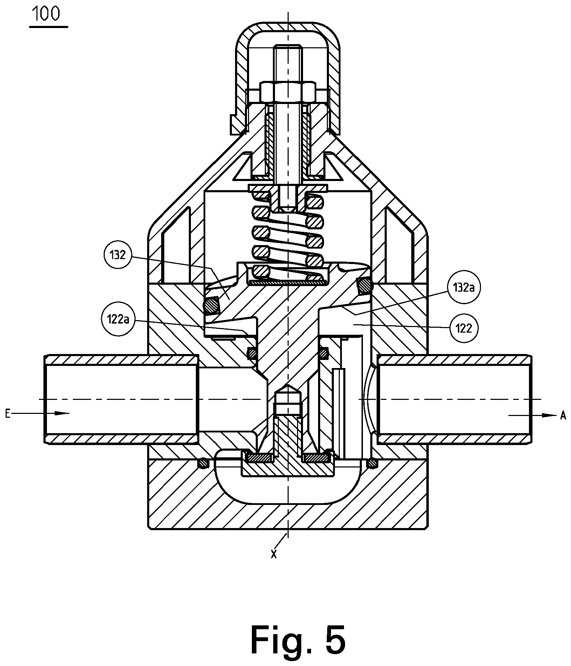

Fig. 5 zeigt eine Schnittdarstellung eines zweiten Ausführungsbeispiels eines erfindungsgemäßen Druckreduzierventils 100.

Das Druckreduzierventil 100 weist dabei sämtliche strukturellen und funktionalen Merkmale wie das vorstehend in Zusammenhang mit den Fig. 1 bis 4 gezeigte Ausführungsbeispiel eines Druckreduzierventils 10 auf.

Lediglich die folgenden Unterschiede sollen nunmehr kurz vorgestellt werden.

Hier ist die der Druckkammer 122 zugewandte Oberfläche 132a des Trennelements 132, hier ebenfalls durch einen Kolbenzylinderring 132 ausgebildet, bezogen auf die Kolbenachse X geneigt angeordnet. Man kann von einem gegen die Flächennormale des Sitzes gekippten Kolben sprechen.

Zugleich ist allerdings der Boden 122a der Druckkammer 122 waagerecht angeordnet bezogen auf die Kolbenachse X.

Zur leichteren Zuordnung sind in Fig. 5 auch der Einlass E und der Auslass A explizit bezeichnet.

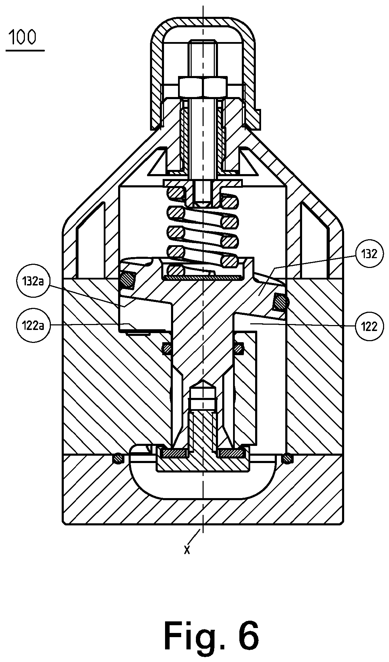

Fig. 6 zeigt eine um 90° um die Kolbenachse X gedrehte Ansicht des in Fig. 5 gezeigten Druckreduzierventils 100.

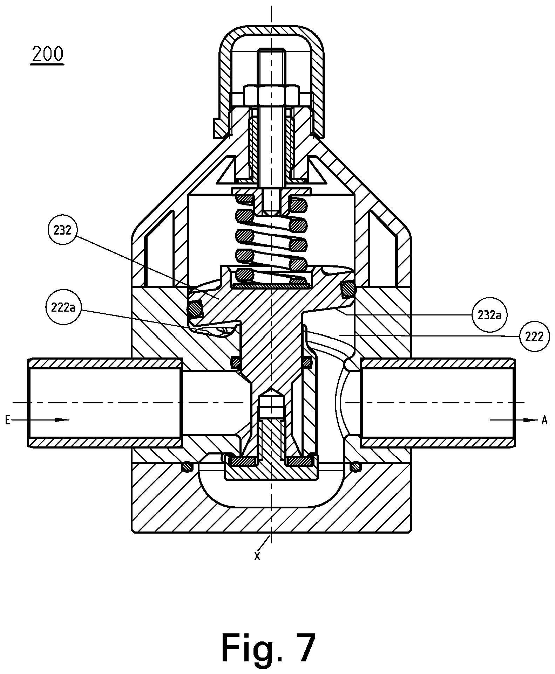

Fig. 7 zeigt ein drittes Ausführungsbeispiel eines erfindungsgemäßen Druckreduzierventils 200.

Das Druckreduzierventil 200 weist dabei sämtliche in Fig. 5 und 6 gezeigten strukturellen und funktionalen Merkmale des Druckreduzierventils 100 auf.

Hier ist jedoch auch der Boden 222a der Druckkammer 222 nicht waagerecht, sondern ebenfalls geneigt bezogen auf die Ausrichtung der Kolbenachse X angeordnet.

Weiter zum Verständnis mit Bezugszeichen benannt sind das Trennelement 232 mit der der Druckkammer 222 zugewandten Oberfläche 232a.

Zur leichteren Zuordnung sind in Fig. 7 auch der Einlass E und der Auslass A explizit bezeichnet.

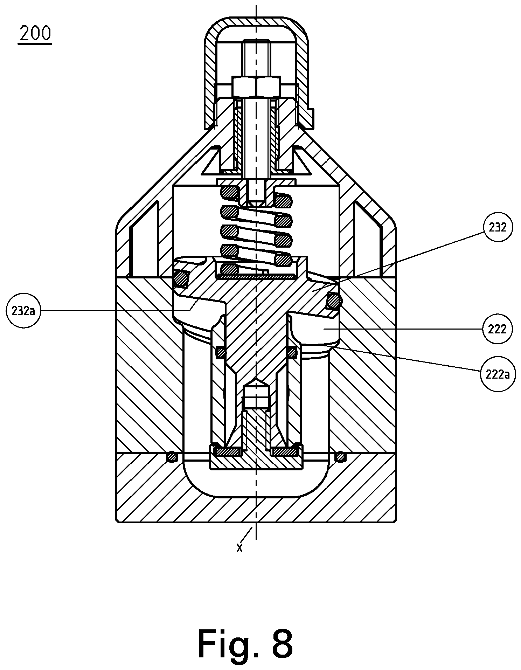

Fig. 8 zeigt eine um 90° um die Kolbenachse X gezeigte Schnittansicht des in Fig. 7 gezeigten Druckreduzierventils 200.

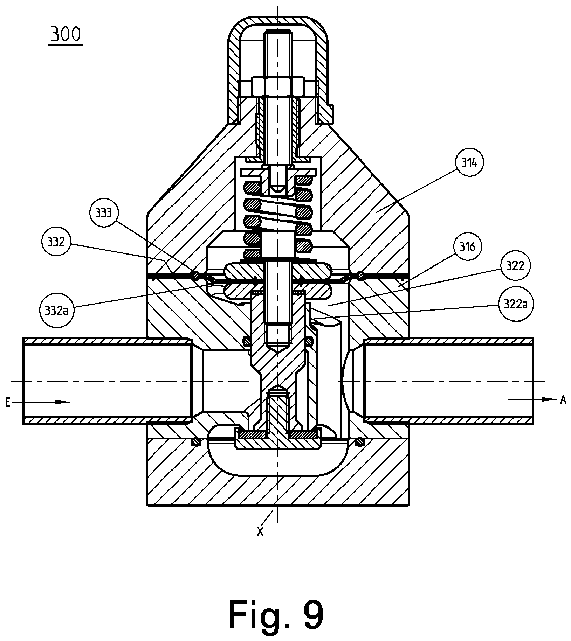

Fig. 9 zeigt ein viertes Ausführungsbeispiel eines erfindungsgemäßen Druckreduzierventils 300.

Das Druckreduzierventil 300 weist dabei sämtliche strukturellen und funktionalen Merkmale auf, wie das in den Figuren 1 bis 4 vorstehend beschriebene erste Ausführungsbeispiel eines Druckreduzierventils 10.

Lediglich die folgenden Unterschiede sind vorhanden.

Anstelle eines als Kolbenzylinderabschnitt ausgeführten Trennelements 32 ist als Trennelement 332 eine Membran 332 vorgesehen.

Diese Membran 332 ist dabei ebenso wie der Querschnitt des Gehäuses 312 kreisrund ausgestaltet und zwischen dem Gehäuseoberteil 314 und dem Gehäusemittelteil 316 klemmend gehalten.

Die Membran 332 weist dabei auch einen umlaufenden Dichtwulst 333 auf, der in entsprechenden Nuten im Gehäusedeckel 318 und im Gehäusemittelteil 316 gehalten ist.

Weiter zum Verständnis mit Bezugszeichen benannt ist die der Druckkammer 322 zugewandte Oberfläche 332a der Membran 332.

Zur leichteren Zuordnung sind in Fig. 9 auch der Einlass E und der Auslass A explizit bezeichnet.

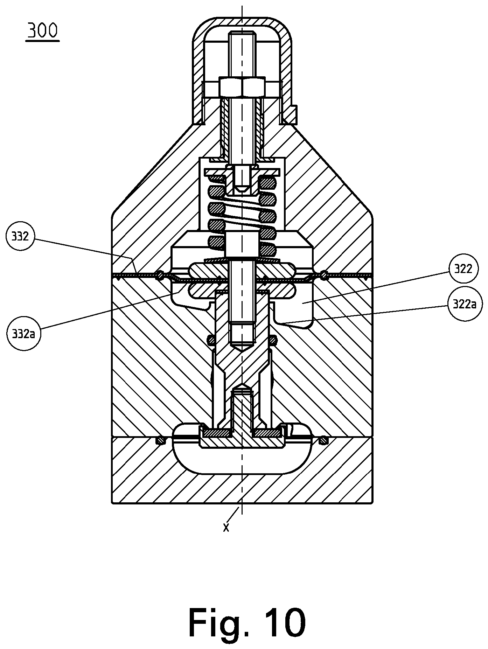

Fig. 10 zeigt eine im Bezug auf die Kolbenachse X um 90° gedrehte Ansicht des in Fig. 9 gezeigten Ausführungsbeispiels.

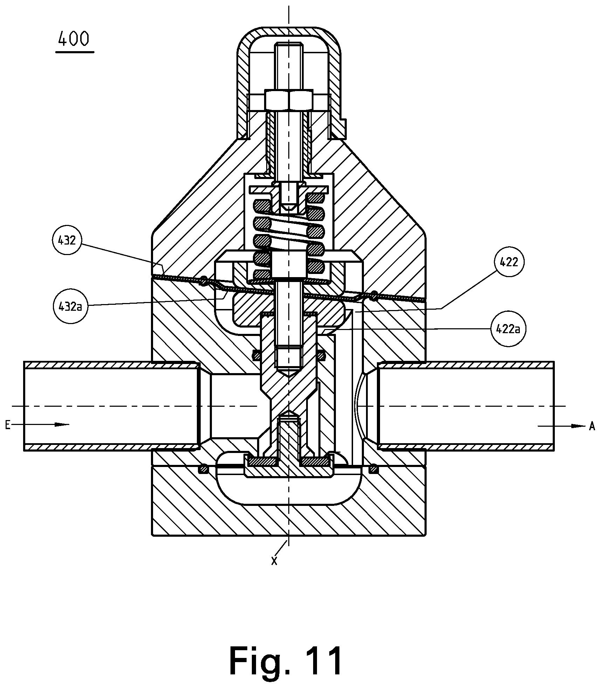

Fig. 11 zeigt ein fünftes Ausführungsbeispiel eines erfindungsgemäßen Druckreduzierventils 400.

Das Druckreduzierventil 400 weist dabei sämtliche strukturellen und funktionalen Merkmale wie das in Fig. 9 und 10 gezeigte Ausführungsbeispiel des Druckreduzierventils 300 auf.

Allerdings ist hier der Boden 422a der Druckkammer 422 waagerecht im Bezug auf die Kolbenachse X angeordnet. Allerdings ist die Membran 432 hier geneigt im Bezug auf die Kolbenachse X und es handelt sich hier um eine gegen die Flächennormale des Sitzes gekippte Membran 432.

Weiter zum Verständnis mit Bezugszeichen benannt ist die der Druckkammer 422 zugewandte Oberfläche 432a der Membran 432.

Zur leichteren Zuordnung sind in Fig. 11 auch der Einlass E und der Auslass A explizit bezeichnet.

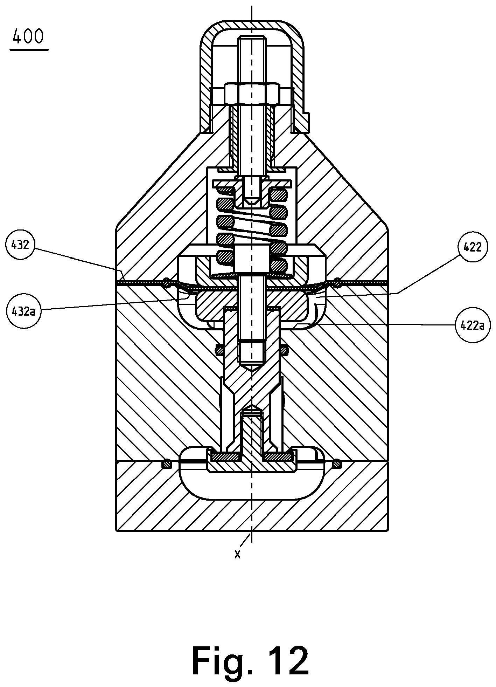

Fig. 12 zeigt eine im Bezug auf die Kolbenachse X um 90° gedrehte Ansicht des in Fig. 11 gezeigten Ausführungsbeispiels.

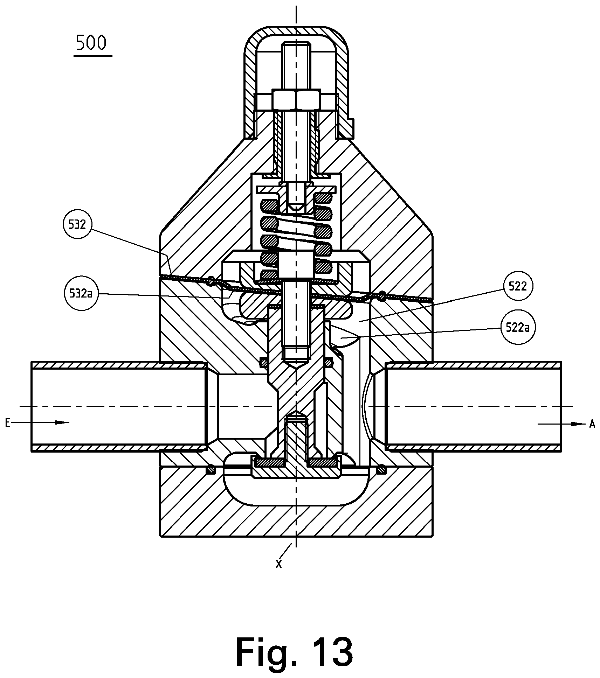

Fig. 13 zeigt eine sechste Ausführungsform eines erfindungsgemäßen Druckreduzierventils 500.

Das Druckreduzierventil 500 weist dabei sämtliche strukturellen und funktionalen Merkmale auf wie das in Fig. 11 gezeigte Ausführungsbeispiel des Druckreduzierventils 400.

Hier ist der Boden 522a der Druckkammer 522 ebenfalls geneigt ausgeführt, wie dies auch beim Ausführungsbeispiel gemäß Fig. 9 und 10 des Druckreduzierventils 300 der Fall ist.

Weiter zum Verständnis mit Bezugszeichen benannt ist die der Druckkammer 522 zugewandte Oberfläche 532a der Membran 532.

Zur leichteren Zuordnung sind in Fig. 11 auch der Einlass E und der Auslass A explizit bezeichnet.

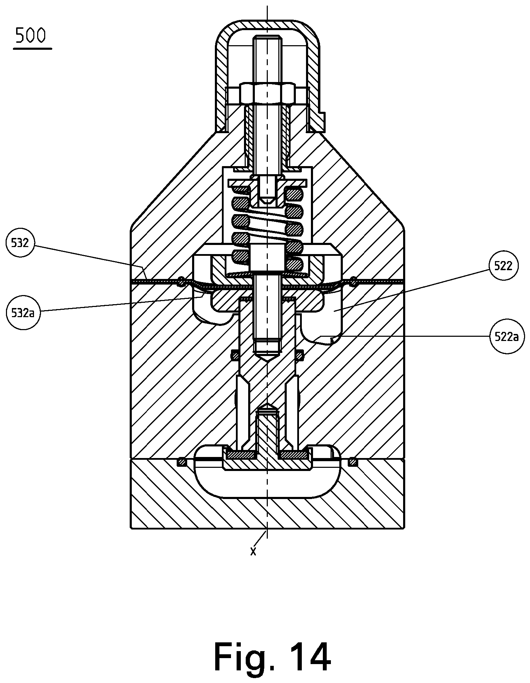

Fig. 14 zeigt eine im Bezug auf die Kolbenachse X um 90° gedrehte Ansicht des in Fig. 13 gezeigten Ausführungsbeispiels.

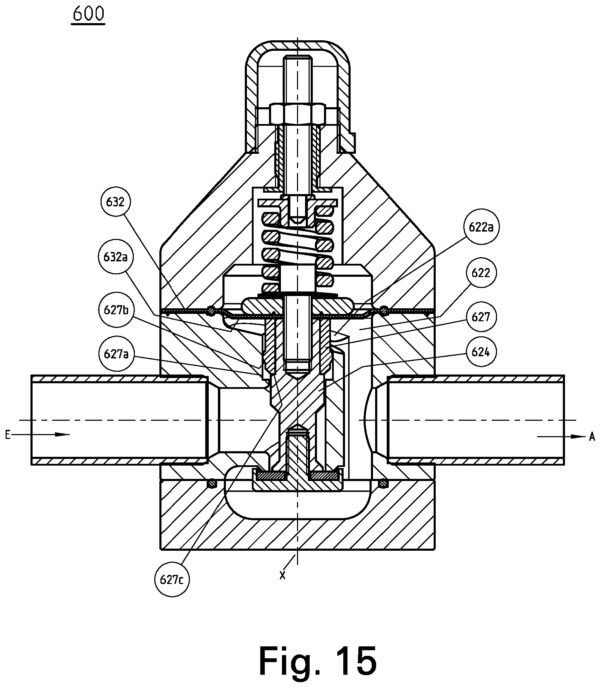

Fig. 15 zeigt eine siebte Ausführungsform eines erfindungsgemäßen Druckreduzierventils 600.

Das Druckreduzierventil 600 weist dabei sämtliche strukturellen und funktionalen Merkmale auf wie das in Fig. 9 gezeigte Ausführungsbeispiel des Druckreduzierventils 300.

Weiter zum Verständnis mit Bezugszeichen benannt ist die Druckkammer 622 mit ihrem geneigten Boden 622a, die Membran 632, die hier als Trennelement 632 dient, und die der Druckkammer 622 zugewandte Oberfläche 632a der Membran 632.

Zur leichteren Zuordnung sind in Fig. 9 auch der Einlass E und der Auslass A explizit bezeichnet.

Hier ist aber zwischen einer Gehäusewandung 627a und Kolben 624 eine Dichthülse 627 vorgesehen.

Die Dichthülse 627 weist einen umlaufenden Dichtwulst 627b auf.

Die Dichthülse 627 ist weiter im montierten Zustand des Druckreduzierventils 600 derart angeordnet und beschaffen, dass sie eine Dichtung zwischen Trennelement 632, hier die Membran 632, und Kolben 624 ausbildet.

Die Dichthülse 627 ist auf einem Ansatz 627c des Kolbens 624 aufgeschoben und sitzt auf dem Ansatz 627c direkt und dichtend auf.

Der Ansatz 627c ist dabei im montierten Zustand dem Trennelement 627 zugewandt.

Die Funktion der Dichthülse 627 ist somit nicht nur, eine Dichtung zwischen der Gehäusewandung 627a und dem Kolben 624 bereitzustellen, sondern auch zwischen Kolben 624 und dem Trennelement 632.

Wie dies in Fig. 15 ersichtlich ist, wird üblicherweise zur Befestigung des Trennelementes am Kolben eine Schrauben vom fluidfreien Bereich durch die Membran hindurch in den Kolben eingeschraubt, weshalb eine gesonderte Abdichtung erforderlich ist. Allerdings sind auch alternative Lösungen denkbar.

Im in Fig. 15 gezeigten Ausführungsbeispiel ist die Dichthülse elastomerfrei und aus Fluorpolymeren, hier aus PTFE, ausgebildet.

Das Dichtelement zwischen Kolben und Gehäuseteil kann also in der Form einer aufgesteckten Hülse ausgestaltet werden, die neben einer dichtenden Wirkung in der zentralen Bohrung (radiale Dichtung) auch noch eine Dichtwirkung zwischen Kolben und Trennelement aufweist (axiale Dichtung in Richtung Trenneelement). Dies erhöht die elastomerfreie Abdichtung zwischen Trennelement und Kolben, wenn diese zwei- oder mehrteilig ausgeführt sind.

Die verringerten Kippmomente durch die Ausgestaltung der Druckkammer und der Steigbohrung und die gleichmäßigere Belastung des Trennelements begünstigen diese Konstruktion.

### Bezugszeichen

- 10: Druckreduzierventil
- 12: Gehäuse
- 14: Gehäuseoberteil
- 16: Gehäusemittelteil
- 18: Gehäusedeckel
- 20: Kolbenbohrung
- 22: Druckkammer
- 22a: Boden
- 24: Kolben
- 26: Kolbenoberteil
- 28: Kolbenunterteil
- 30: Gewinde
- 32: Trennelement, Kolbenzylinderring,
- 32a: Oberfläche
- 33: Radialdichtelement
- 34: Sitzdichtung
- 36: Sitz
- 38: Dichtvorsprung
- 39: erster Anschluss
- 40: zweiter Anschluss
- 42: Rohrstück
- 44: Rohrstück
- 46: fluiddurchströmter Bereich
- 48: Ventilraum
- 49: Steigbohrung
- 50: fluidfreier Bereich
- 52: Dichtung
- 54: Feder
- 56: Scheibe
- 58: Einstellschraube
- 60: Buchse
- 62: Einstellmutter
- 66: Deckel

- 100: Druckreduzierventil
- 122: Druckkammer
- 122a: Boden
- 132: Trennelement, Membran
- 132a: Oberfläche

- 200: Druckreduzierventil
- 222: Druckkammer
- 222a: Boden
- 232: Trennelement, Membran
- 232a: Oberfläche

- 300: Druckreduzierventil
- 314: Gehäuseoberteil
- 316: Gehäusemittelteil
- 322: Druckkammer
- 322a: Boden
- 332: Trennelement, Membran
- 332a: Oberfläche
- 333: Dichtwulst

- 400: Druckreduzierventil
- 422: Druckkammer
- 422a: Boden
- 432: Trennelement, Membran
- 432a: Oberfläche
- 500: Druckreduzierventil
- 522: Druckkammer
- 522a: Boden
- 532: Trennelement, Membran
- 532a: Oberfläche

- 600: Druckreduzierventil
- 622: Druckkammer
- 622a: Boden
- 624: Kolben
- 627: Dichthülse
- 627a: Gehäusewandung
- 627b: Dichtwulst
- 627c: Ansatz
- 632: Trennelement, Membran
- 632a: Oberfläche

- A: Auslass
- E: Einlass
- E1: Ebene
- E2: Ebene
- X: Kolbenachse

- α: Winkel
- β: Winkel
- Θ: Winkel

## Patentansprüche

1. Druckreduzierventil (10; 100; 200; 300; 400; 500; 600) für flüssige und gasförmige Medien, insbesondere zur Regelung des Drucks in Rohrleitungssystemen, vorzugsweise in Gebäuden, mit einem Gehäuse (12), wobei das Gehäuse (12) ein Gehäuseoberteil (14), ein Gehäusemittelteil (16) und einen Gehäusedeckel (18) aufweist, wobei das Gehäusemittelteil (16) eine Kolbenbohrung (20) aufweist, wobei das Druckreduzierventil (10) weiter ein Trennelement (32; 132; 232; 332; 432; 532; 632) zur Unterteilung des Gehäuses (12) in einen fluidfreien und einen fluiddurchströmten Bereich (48, 50) aufweist, wobei der fluiddurchströmte Bereich wenigstens eine Druckkammer (22; 122; 222; 322; 422; 522; 622) umfasst, die von dem Trennelement (32; 132; 232; 332; 432; 532; 632) teilweise begrenzt wird, wobei das Druckreduzierventil (10; 100; 200; 300; 400; 500; 600) außerdem einen in der Kolbenbohrung (20) beweglich geführten Kolben (24) aufweist, wobei der Kolben (24) an einem seiner Enden mit dem Trennelement (32; 132; 232; 332; 432; 532; 632) verbunden ist und an seinem anderen Ende eine Sitzdichtung (34) aufweist, **dadurch gekennzeichnet, dass** die Druckkammer (22; 122; 222; 322; 422; 522; 622) einen Boden (22a; 122a; 222a; 322a; 422a; 522a; 622a) aufweist, der auf dem Trennelement (32; 132; 232; 332; 432; 532; 632) abgewandten Seite der Druckkammer (22; 122; 222; 322; 422; 522; 622) angeordnet ist und dessen der Druckkammer zugewandte Oberfläche relativ zu dem Trennelement (32; 132; 232; 332; 432; 532; 632) zumindest teilweise geneigt ist.

2. Druckreduzierventil (10; 100; 200; 300; 400; 500; 600) nach Anspruch 1, **dadurch gekennzeichnet, dass** der Boden (22a; 122a; 222a; 322a; 422a; 522a; 622a) durch das Gehäuse (12) ausgebildet ist.

3. Druckreduzierventil (10; 300; 600) nach Anspruch 1 oder Anspruch 2, **dadurch gekennzeichnet, dass** die der Druckkammer (32a; 332a; 632a) zugewandte Oberfläche des Trennelements (32; 332; 632) zumindest teilweise bezogen auf die Kolbenachse (X) waagrecht angeordnet ist.

4. Druckreduzierventil (100; 400) nach Anspruch 1 oder Anspruch 2, **dadurch gekennzeichnet, dass** die der Druckkammer (122; 422) zugewandte Oberfläche des Bodens (122a; 422a) zumindest teilweise bezogen auf die Kolbenachse (X) waagrecht angeordnet ist.

5. Druckreduzierventil (200; 500) nach Anspruch 1 oder Anspruch 2, **dadurch gekennzeichnet, dass** die der Druckkammer (222; 522) zugewandte Oberfläche des Bodens (222a; 522a) und die der Druckkammer (222; 522) zugewandte Oberfläche (232a; 532a) des Trennelements (232; 532) jeweils zumindest teilweise bezogen auf die Kolbenachse (X) geneigt angeordnet ist.

6. Druckreduzierventil (300; 400; 500; 600) nach einem der vorhergehenden Ansprüche, **dadurch gekennzeichnet, dass** das Trennelement (332; 432; 532; 632) eine Membran (332; 432; 532; 632) ist oder umfasst.

7. Druckreduzierventil (10; 100; 200) nach einem der vorhergehenden Ansprüche, **dadurch gekennzeichnet, dass** das Trennelement (32; 132; 232) ein Abschnitt des Kolbens (24; 124; 224) ist oder durch einen Abschnitt des Kolbens (24; 124; 224) ausgebildet ist.

8. Druckreduzierventil (10; 100; 200) nach Anspruch 7, **dadurch gekennzeichnet, dass** die das Trennelement (32; 132; 232) wenigstens ein Radialdichtelement (33) aufweist, insbesondere wobei das Radialdichtelement (33) im montierten Zustand des Druckreduzierventils (10; 100; 200) dichtend an einer Wandung der Kolbenbohrung (20) anliegt.

9. Druckreduzierventil (10) nach einem der vorhergehenden Ansprüche, **dadurch gekennzeichnet, dass** die der Druckkammer (22) zugewandte Oberfläche des Bodens (22a) einen Neigungswinkel relativ zu der der Druckkammer zugewandten Oberfläche (32a) des Trennelements (32) aufweist, der im Bereich zwischen größer 0° bis ca. 45°, insbesondere zwischen größer 0° bis ca. 15° gewählt ist.

10. Druckreduzierventil (10; 100; 200; 300; 400; 500; 600) nach einem der vorhergehenden Ansprüche, **dadurch gekennzeichnet, dass** die Druckkammer (22; 122; 222; 322; 422; 522; 622) an wenigstens eine Steigbohrung (49) anschließt.

11. Druckreduzierventil (10; 100; 200; 300; 400; 500; 600) nach Anspruch 10, **dadurch gekennzeichnet, dass** die Steigbohrung (49) einen nierenförmigen Querschnitt aufweist.

12. Druckreduzierventil (10; 100; 200; 300; 400; 500; 600) nach Anspruch 10 oder Anspruch 11, **dadurch gekennzeichnet, dass** die Steigbohrung (49) bezogen auf den Öffnungsquerschnitt zwischen größer 0° bis ca. 255° aufweist, insbesondere 90° bis 135°.

13. Druckreduzierventil (600) nach einem der vorhergehenden Ansprüche, **dadurch gekennzeichnet, dass** zwischen Gehäuse (627a) und Kolben (624) eine Dichthülse (627) vorgesehen ist.

14. Druckreduzierventil (600) nach Anspruch 13, **dadurch gekennzeichnet, dass** die Dichthülse (627) im montierten Zustand des Druckreduzierventils (600) derart angeordnet und beschaffen ist, dass sie eine Dichtung zwischen Trennelement (632) und Kolben (624) ausbildet.

15. Druckreduzierventil (600) nach Anspruch 13 oder Anspruch 14, **dadurch gekennzeichnet, dass** die Dichthülse (627) elastomerfrei und/oder aus Fluorpolymeren, insbesondere aus PTFE, ausgebildet ist.

## Claims

1. A pressure reducing valve (10; 100; 200; 300; 400; 500; 600) for liquid and gaseous media, in particular for pressure control in piping systems, preferably in buildings, comprising a housing (12) which has an upper housing part (14), an intermediate housing part (16) and a housing cover (18), the intermediate housing part (16) comprising a piston bore (20), the pressure reducing valve (10) further comprising a separating element (32; 132; 232; 332; 432; 532; 632) for subdividing the housing (12) in a fluid-free and a fluid-flow area (48, 50), the fluid-flow area including at least one pressure chamber (22; 122; 222; 322; 422; 522; 622) which is partially delimited by the separating element (32; 132; 232; 332; 432; 532; 632), the pressure reducing valve (10; 100; 200; 300; 400; 500; 600) also comprising a piston (24) movably guided in the piston bore (20), the piston (24) having one of its ends connected to the separating element (32; 132; 232; 332; 432; 532; 632) and being provided with a seat gasket (34) at its other end, **characterized in that** the pressure chamber (22; 122; 222; 322; 422; 522; 622) comprises a bottom (22a; 122a; 222a; 322a; 422a; 522a; 622a) which is arranged on the side of the pressure chamber (22; 122; 222; 322; 422; 522; 622) facing away from the separating element (32; 132; 232; 332; 432; 532; 632) and whose surface facing the pressure chamber is at least partially inclined relative to the separating element (32; 132; 232; 332; 432; 532; 632).

2. The pressure reducing valve (10; 100; 200; 300; 400; 500; 600) according to claim 1, **characterized in that** the bottom (22a; 122a; 222a; 322a; 422a; 522a; 622a) is formed by the housing (12).

3. The pressure reducing valve (10; 300; 600) according to claim 1 or claim 2, **characterized in that** the surface of the separating element (32; 332; 632) facing the pressure chamber (32a; 332a; 632a) is arranged to be horizontal at least partially related to the piston axis (X).

4. The pressure reducing valve (100; 400) according to claim 1 or claim 2, **characterized in that** the surface of the bottom (122a; 422a) facing the pressure chamber (122; 422) is arranged to be horizontal at least partially related to the piston axis (X).

5. The pressure reducing valve (200; 500) according to claim 1 or claim 2, **characterized in that** the surface of the bottom (222a; 522a) facing the pressure chamber (222; 522) and the surface (232a; 532a) of the separating element (232; 532) facing the pressure chamber (222; 522) are each arranged to be inclined at least partially related to the piston axis (X).

6. The pressure reducing valve (300; 400; 500; 600) according to any of the preceding claims, **characterized in that** the separating element (332; 432; 532; 632) is or includes a membrane (332; 432; 532; 632).

7. The pressure reducing valve (10; 100; 200) according to any of the preceding claims, **characterized in that** the separating element (32; 132; 232) is a portion of the piston (24; 124; 224) or is formed by a portion of the piston (24; 124; 224).

8. The pressure reducing valve (10; 100; 200) according to claim 7, **characterized in that** the separating element (32; 132; 232) comprises at least one radial gasket element (33), in particular wherein the radial gasket element (33), in the mounted state of the pressure reducing valve (10; 100; 200), is in sealing contact with a wall of the piston bore (20).

9. The pressure reducing valve (10) according to any of the preceding claims, **characterized in that** the surface of the bottom (22a) facing the pressure chamber (22) has an inclination angle relative to the surface (32a) of the separating element (32) facing the pressure chamber, which angle is selected in the range between more than 0° to approx. 45°, in particular between more than 0° to approx. 15°.

10. The pressure reducing valve (10; 100; 200; 300; 400; 500; 600) according to any of the preceding claims, **characterized in that** the pressure chamber (22; 122; 222; 322; 422; 522; 622) adjoins at least one vertical bore (49).

11. The pressure reducing valve (10; 100; 200; 300; 400; 500; 600) according to claim 10, **characterized in that** the vertical bore (49) has a kidney-shaped cross-section.

12. The pressure reducing valve (10; 100; 200; 300; 400; 500; 600) according to claim 10 or claim 11, **characterized in that** the vertical bore (49), related to the opening section, has between more than 0° to approx. 255°, in particular 90° to 135°.

13. The pressure reducing valve (600) according to any of the preceding claims, **characterized in that** a sealing sleeve (627) is provided between the housing (627a) and the piston (624).

14. The pressure reducing valve (600) according to claim 13, **characterized in that** the sealing sleeve (627), in the mounted state of the pressure reducing valve (600), is arranged and designed such that it forms a gasket between the separating element (632) and the piston (624).

15. The pressure reducing valve (600) according to claim 13 or claim 14, **characterized in that** the sealing sleeve (627) is made without any elastomeric material and/or from fluoropolymers, in particular from PTFE.

## Revendications

1. Soupape de réduction de pression (10 ; 100 ; 200 ; 300 ; 400 ; 500 ; 600) pour milieux fluides et gazeux, notamment pour le réglage de la pression dans des systèmes de conduite tubulaire, de préférence dans des bâtiments, avec un carter (12), le carter (12) comportant une partie de carter supérieure (14), une partie de carter centrale (16) et un couvercle de carter (18), la partie de carter centrale (16) comportant un alésage de piston (20), la soupape de réduction de pression (10) comportant en sus un élément de séparation (32 ; 132 ; 232 ; 332 ; 432 ; 532 ; 632) permettant de diviser le carter (12) en une zone (48, 50) sans fluide et une zone traversée par du fluide, la zone traversée par du fluide comprenant au moins une chambre de pression (22 ; 122 ; 222 ; 322 ; 422 ; 522 ; 622) qui est délimitée au moins en partie par l'élément de séparation (32 ; 132 ; 232 ; 332 ; 432 ; 532 ; 632), la soupape de réduction de pression (10 ; 100 ; 200 ; 300 ; 400 ; 500 ; 600) comportant en outre un piston (24) guidé de façon mobile dans l'alésage de piston (20), le piston (24) étant relié à l'élément de séparation (32 ; 132 ; 232 ; 332 ; 432 ; 532 ; 632) au niveau de sa première extrémité et un joint de siège (34) au niveau de son autre extrémité, **caractérisée en ce que** la chambre de pression (22 ; 122 ; 222 ; 322 ; 422 ; 522 ; 622) comporte un fond (22a ; 122a ; 222a ; 322a ; 422a ; 522a ; 622a) disposé sur le côté, opposé à l'élément de séparation (32 ; 132 ; 232 ; 332 ; 432 ; 532 ; 632), de la chambre de pression (22 ; 122 ; 222 ; 322 ; 422 ; 522 ; 622) et que sa surface orientée vers la chambre de pression est inclinée au moins en partie par rapport à l'élément de séparation (32 ; 132 ; 232 ; 332 ; 432 ; 532 ; 632).

2. Soupape de réduction de pression (10 ; 100 ; 200 ; 300 ; 400 ; 500 ; 600) selon la revendication 1, **caractérisée en ce que** le fond (22a ; 122a ; 222a ; 322a ; 422a ; 522a ; 622a) est réalisé au travers du carter (12).

3. Soupape de réduction de pression (10 ; 300 ; 600) selon la revendication 1 ou 2, **caractérisée en ce que** la surface, orientée vers la chambre de pression (32a ; 332a ; 632a), de l'élément de séparation (32 ; 332 ; 632) est disposée au moins en partie à l'horizontale par rapport à l'axe de piston (X).

4. Soupape de réduction de pression (100 ; 400) selon la revendication 1 ou 2, **caractérisée en ce que** la surface, orientée vers la chambre de pression (122 ; 422), du fond (122a ; 422a) est disposée au moins en partie à l'horizontale par rapport à l'axe de piston (X).

5. Soupape de réduction de pression (200 ; 500) selon la revendication 1 ou 2, **caractérisée en ce que** la surface, orientée vers la chambre de pression (222 ; 522), du fond (222a ; 522a) et que la surface (232a ; 532a), orientée vers la chambre de pression (222 ; 522), de l'élément de séparation (232 ; 532) est disposée de façon inclinée respectivement au moins en partie par rapport à l'axe de piston (X).

6. Soupape de réduction de pression (300 ; 400 ; 500 ; 600) selon l'une quelconque des revendications précédentes, **caractérisée en ce que** l'élément de séparation (332 ; 432 ; 532 ; 632) est une membrane (332 ; 432 ; 532 ; 632) ou en comprend une.

7. Soupape de réduction de pression (10 ; 100 ; 200) selon l'une quelconque des revendications précédentes, **caractérisée en ce que** l'élément de séparation (32 ; 132 ; 232) est une section du piston (24 ; 124 ; 224) ou est réalisé au travers d'une section du piston (24 ; 124 ; 224).

8. Soupape de réduction de pression (10; 100; 200) selon la revendication 7, **caractérisée en ce que** l'élément de séparation (32 ; 132 ; 232) comporte au moins un élément d'étanchéité radial (33), l'élément d'étanchéité radial (33) butant notamment à l'état monté de la soupape de réduction de pression (10 ; 100 ; 200) de façon étanche contre une paroi de l'alésage de piston (20).

9. Soupape de réduction de pression (10) selon l'une quelconque des revendications précédentes, **caractérisée en ce que** la surface, orientée vers la chambre de pression (22), du fond (22a) comporte un angle d'inclinaison par rapport à la surface (32a), orientée vers la chambre de pression, de l'élément de séparation (32) qui est sélectionné dans la plage comprise entre plus de 0° à environ 45°, notamment entre plus de 0° à environ 15°.

10. Soupape de réduction de pression (10 ; 100 ; 200 ; 300 ; 400 ; 500 ; 600) selon l'une quelconque des revendications précédentes, **caractérisée en ce que** la chambre de pression (22 ; 122 ; 222 ; 322 ; 422 ; 522 ; 622) est connectée à au moins un alésage vertical (49).

11. Soupape de réduction de pression (10 ; 100 ; 200 ; 300 ; 400 ; 500 ; 600) selon la revendication 10, **caractérisée en ce que** l'alésage vertical (49) comporte une section transversale réniforme.

12. Soupape de réduction de pression (10 ; 100 ; 200 ; 300 ; 400 ; 500 ; 600) selon la revendication 10 ou la revendication 11, **caractérisée en ce que** l'alésage vertical (49) est compris, par rapport à la section transversale d'ouverture, entre plus de 0° à environ 255°, notamment de 90° à 135°.

13. Soupape de réduction de pression (600) selon l'une quelconque des revendications précédentes, **caractérisée en ce qu'**une douille d'étanchéité (627) est prévue entre le carter (627a) et le piston (624).

14. Soupape de réduction de pression (600) selon la revendication 13, **caractérisée en ce que** la douille d'étanchéité (627) est disposée et conçue de telle sorte, à l'état monté de la soupape de réduction de pression (600), qu'elle forme un joint d'étanchéité entre l'élément de séparation (632) et le piston (624).

15. Soupape de réduction de pression (600) selon la revendication 13 ou la revendication 14, **caractérisée en ce que** la douille d'étanchéité (627) est réalisée sans élastomère et/ou à partir de fluoropolymères, notamment de PTFE.
